# EUROPEAN PATENT APPLICATION

(11) **EP 2 645 819 A1**
(43) Date of publication of application: **02.10.2013**
(21) Application number: 12275097.9
(22) Date of filing: 25.06.2012
(51) Int. Cl.: H05B 33/08

(54) **Light emitting diode driving apparatus**

(30) Priority: 30.03.2012 KR 20120032871
(71) Applicant: Samsung Electro-Mechanics Co., Ltd, Suwon, Gyunggi-Do (KR)
(72) Inventor: Lee, Yeun Joong, Gyunggi-do (KR); Park, Deuk Hee, Gyunggi-do (KR); Cha, Sang Hyun, Gyunggi-do (KR); Lee, Chang Seok, Gyunggi-do (KR)
(74) Representative: Potter Clarkson LLP

(57) **Abstract**

There is provided a light emitting diode driving apparatus satisfying regulations for current transferred to a light emitting diode. The light emitting diode driving apparatus includes: a power supplying unit receiving input power to convert the input power into a preset driving power and supplying the driving power to a light emitting diode unit including at least one light emitting diode; a detecting unit receiving the driving power supplied to the light emitting diode unit to detect voltage flowing in the light emitting diode unit; a controlling unit comparing detection voltage detected by the detecting unit with a preset reference voltage to control a power conversion operation of the power supplying unit; and a driving unit driving the power conversion operation according to controlling by the controlling unit.

## Description

### CROSS-REFERENCE TO RELATED APPLICATIONS

This application claims the priority of Korean Patent Application No. 10-2012-0032871 filed on March 30, 2012, in the Korean Intellectual Property Office, the disclosure of which is incorporated herein by reference.

### BACKGROUND OF THE INVENTION

### Field of the Invention

The present invention relates to a light emitting diode driving apparatus satisfying current regulation characteristics in current transferred to a light emitting diode.

### Description of the Related Art

Recently, interest in and a demand for light emitting diodes (LEDs) has increased.

Since a device using a light emitting diode may be manufactured to be compact, it may be used even in a location in which it is difficult for an existing electronic product to be installed. In the case in which a device using the light emitting diode is used as a general lighting device, since light of varied colors and illumination intensities may easily be implemented in a device using the light emitting diode, it may be used in a lighting device or system suitable for use in a situation such as displaying a movie, reading a book, holding a meeting, or the like.

In addition, a lighting device or system using the light emitting diode consumes an amount of power corresponding to 1/8 of that consumed by an incandescent lamp, has a lifespan of 50 to 100 thousand hours, corresponding to a lifespan 5 to 10 times that of an incandescent lamp, is a mercury-free light source, is environmentally-friendly, and may be variably implemented.

Due to these characteristics, a light emitting diode lighting business has been promoted through national policy initiatives in countries such as Korea, the USA, Japan, Australia, and others.

Moreover, in accordance with the recent development of flat panel display technology, a flat panel display has also been used for automobile dashboard displays, as well as for smart phones, game machines, and digital cameras. In the future, the use of flat panel displays is projected to increase in fields related to personal life, such as in ultrathin-type televisions, transparent navigation devices, and the like. Further, in the current display field, new flat panel displays (FPDs), reflecting the requirements of the multimedia age, such as high resolution, large screens, and the like, have mainly been developed. Particularly, in the case of a large display, a liquid crystal display (LCD) TV has rapidly been developed, such that it will be expected that LCDs will play a leading role in the development of many products in view of the cost and marketability thereof in the future.

A thin film transistor liquid crystal display (TFT-LCD) is mainly used in a flat panel display. The TFT-LCD includes a backlight unit emitting light, and mainly uses a cold cathode fluorescent lamp (CCFL) as a backlight light source. However, recently, the use of a light emitting diode (LED) has been gradually increased due to various strengths such as low power consumption, long lifespan, environmental-friendliness characteristics, and the like. Therefore, a configuration of a low-cost and low-power electronics system for a backlight unit power module using an LED and an appropriate controlling element therefor have been urgently demanded.

As described above, the light emitting diode of which the use has increased requires a driving apparatus for driving the light emitting diode. As described in the following Related Art Document, in the case of using direct current (DC) power, since a circuit supplying the DC power is complicated, a technology for driving a light emitting diode using rectified power has been developed. However, in this technology, current regulation characteristics in current transferred to the light emitting diode are deteriorated.

### [Related Art Document]

Korean Patent Laid-open Publication No. 2011-0098811

### SUMMARY OF THE INVENTION

An aspect of the present invention provides a light emitting diode driving apparatus controlling the driving of a light emitting diode according to a feedback signal input through a positive feedback loop.

According to an aspect of the present invention, there is provided a light emitting diode driving apparatus including: a power supplying unit receiving input power to convert the input power into a preset driving power and supplying the driving power to a light emitting diode unit including at least one light emitting diode; a detecting unit receiving the driving power supplied to the light emitting diode unit to detect voltage flowing in the light emitting diode unit; a controlling unit comparing a detection voltage detected by the detecting unit with a preset reference voltage to control a power conversion operation of the power supplying unit according to a comparison result; and a driving unit driving the power conversion operation of the power supplying unit according to controlling by the controlling unit.

The detecting unit may detect zero-voltage in the received driving power.

The controlling unit may compare a result of the logic operation between the voltage detected by the detecting unit and a driving signal of the driving unit with the reference voltage to control the power conversion operation of the power supplying unit.

A voltage level of the reference voltage may be determined according to a voltage level of the input power.

The reference voltage may include a first reference voltage having a positive voltage level and a second reference voltage having a negative voltage level.

The driving unit may compare a control signal of the controlling unit with a preset reference signal to provide the driving signal to the power supplying unit.

According to another aspect of the present invention, there is provided a light emitting diode driving apparatus including: a power supplying unit receiving input power to convert the input power into a preset driving power, supplying the driving power to a light emitting diode unit including at least one light emitting diode, and including a transformer having a primary winding receiving the input power, a secondary winding magnetically coupled to the primary winding, and an auxiliary winding having power induced from the secondary winding; a detecting unit receiving the driving power supplied to the light emitting diode unit to detect voltage flowing in the light emitting diode unit; a controlling unit comparing detection voltage detected by the detecting unit with a preset reference voltage to control a power conversion operation of the power supplying unit according to a comparison result; and a driving unit driving the power conversion operation of the power supplying unit according to controlling by the controlling unit.

The detecting unit may include a zero-voltage detector detecting zero-voltage in the driving power received from the secondary winding of the transformer.

The controlling unit may include: an inverter inverting a signal level of the driving signal of the driving unit; an RS latch having a set terminal having a voltage level of the detected driving power applied thereto, a reset terminal having the inverted signal level of the driving signal applied thereto from the inverter, and a Q terminal performing a logic operation on the voltage level of the detected driving power and the inverted signal level of the driving signal to output a result of the logic operation; a sample and holder sampling the logic operation result from the RS latch at a preset time interval; and a first comparator comparing a sampling signal from the sample and holder with the reference voltage to transfer a control signal to the driving unit according to a comparison result, or may include: an inverter inverting a signal level of the driving signal of the driving unit; an RS latch having a set terminal having a voltage level of the detected driving power applied thereto, a reset terminal having the inverted signal level of the driving signal applied thereto from the inverter, and a Q terminal performing a logic operation on the voltage level of the detected driving power and the inverted signal level of the driving signal to output a result of the logic operation; a sample and holder sampling the logic operation result from the RS latch at a preset time interval; a first comparator comparing sampling sampling signal from the sample and holder with the first reference voltage; and a second comparator comparing the sampling signal from the sample and holder with the second reference voltage.

The driving unit may include: an oscillator oscillating at a preset frequency to provide a reference signal; and a second comparator comparing the reference signal from the oscillator and the control signal with each other to provide a driving signal driving a switch of the power supplying unit, or may include: an oscillator oscillating at a preset frequency to provide a reference signal; and a third comparator comparing the reference signal from the oscillator and the control signal with each other to provide a driving signal driving a switch of the power supplying unit.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a diagram of a light emitting diode driving apparatus according to an embodiment of the present invention;
FIG. 2 is a diagram of a light emitting diode driving apparatus according to another embodiment of the present invention; and
FIG. 3 is a signal waveform diagram of main portions of the light emitting diode driving apparatus according to the embodiment of the present invention.

### DETAILED DESCRIPTION OF THE EMBODIMENTS

Hereinafter, embodiments of the present invention will be described in detail with reference to the accompanying drawings so that they can be easily practiced by those skilled in the art to which the present invention pertains.

However, in describing embodiments of the present invention, detailed descriptions of well-known functions or constructions will be omitted so as not to obscure the description of the present invention with unnecessary detail.

In addition, like or similar reference numerals denote parts performing similar functions and actions throughout the drawings.

A case in which any one part is connected with another part includes a case in which the parts are directly connected with each other and a case in which the parts are indirectly connected with each other with other elements interposed therebetween.

In addition, unless explicitly described otherwise, "comprising" any components will be understood to imply the inclusion of other components but not the exclusion of any other components.

Embodiments of the present invention will now be described in detail with reference to the accompanying drawings.

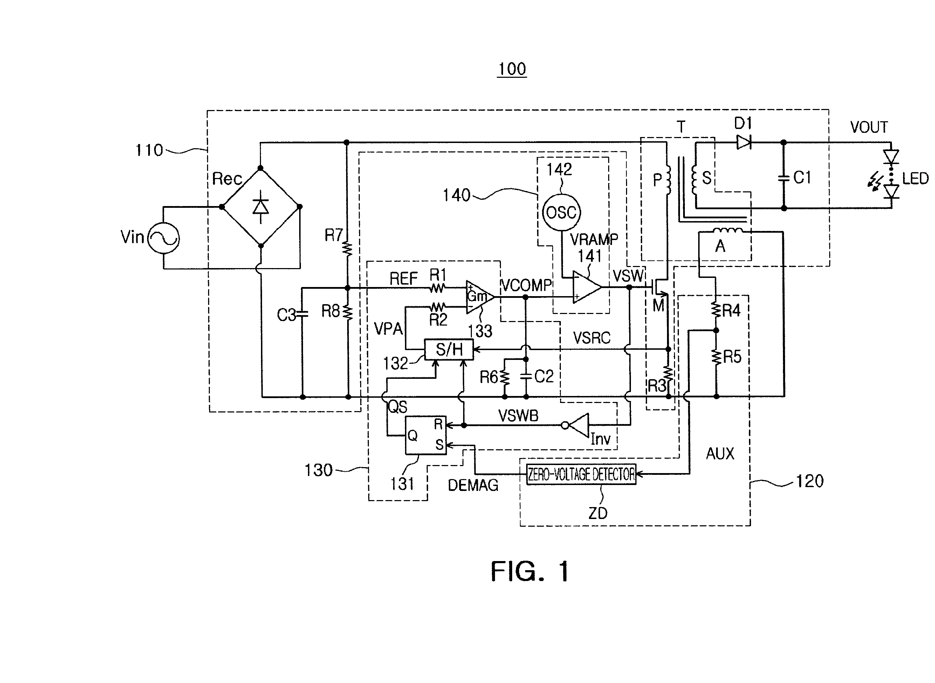

FIG. 1 is a view of a light emitting diode driving apparatus according to an embodiment of the present invention.

Referring to FIG. 1, the light emitting diode driving apparatus 100 according to the embodiment of the present invention may include a power supplying unit 110, a detecting unit 120, a controlling unit 130, and a driving unit 140.

The power supplying unit 110 may receive input power to convert the input power into a preset driving power and supply the driving power to a light emitting diode unit including at least one light emitting diode. The input power may be power generated by rectifying an alternating current (AC) power Vin. Therefore, the power supplying unit 110 may include a rectifier Rec capable of full-wave rectifying or half-wave rectifying the alternating current power Vin.

In addition, the power supplying unit 110 may further include a transformer T, wherein the transformer T may include a primary winding P, a secondary winding S, and an auxiliary winding A.

The primary winding P may receive the rectified power, the secondary winding S may be magnetically coupled to the primary winding P and form a preset turns ratio therewith to receive the induced power from the primary winding P according to switching of a switch M, and the auxiliary winding A may be electrically insulated from the secondary winding S and have power induced from the secondary winding S. That is, the secondary winding S of the transformer T may be magnetically coupled to the primary winding P and the auxiliary winding A while being electrically insulated therefrom to receive the switched power from the primary winding P, such that driving power output from the secondary winding S may be induced to the auxiliary winding A. The driving power VOUT may be stabilized by a diode D1 and a capacitor C1 and supplied to a light emitting diode unit LED having at least one light emitting diode or a plurality of light emitting diodes connected in series with each other.

The detecting unit 120 may include a zero-voltage detector ZD, and the power induced in the auxiliary winding A may be divided by voltage dividing resistors R4 and R5 and transferred to the zero-voltage detector ZD. The zero-voltage detector ZD may detect zero voltage of a voltage level of the power induced in the auxiliary winding A.

The controlling unit 130 may include an inverter Inv, an RS latch 131, a sample and holder 132, and a first comparator 133.

The inverter Inv may invert a signal level of a driving signal VSW from the driving unit 140, the driving signal VSW controlling a switching operation of the switch M of the power supplying unit 110, to transfer the inverted signal level to the RS latch 131.

The RS latch 131 may have a set terminal S, a reset terminal R, and a Q terminal Q outputting a logic result, wherein the set terminal S may have zero-voltage DEMAG detected from the zero-voltage detector ZD and applied thereto, the reset terminal R may have an inverted signal level VSWB of the driving signal VSE applied thereto, and the Q terminal Q may output a result of the logic operation QS between the zero-voltage DEMAG applied to the set terminal S and the inverted signal level VSWB of the driving signal VSE applied to the reset terminal R.

The sample and holder 132 may receive a current VSRC flowing through the switch M, the inverted signal level VSWB of the driving signal VSE, and the logic operation result QS of the RS latch 131 and perform a logic operation on the input signal in a sample and hold scheme. The current VSRC flowing through the switch M may be applied to the sample and holder 132 in the form of a voltage level through a resistor R3.

The first comparator 133 may compare a reference voltage VREF and a result of the logic operation VPA from the sample and holder 132 with each other and supply a control signal VCOMP provided according to the comparison result to the driving unit 140. In addition, the first comparator 133 may amplify a signal level of the comparison result and have a transconductance parameter value Gm indicating output current according to an amount of change in an input voltage. The reference voltage VREF may be received from the outside and be changed, based on the rectified power. Therefore, the reference voltage VREF may be formed by stably dividing the rectifying power by a capacitor C3 and voltage dividing resistors R7 and R8. Therefore, the input alternating current power Vin may be sensed to set the reference voltage VREF, thereby using triac dimming. Each of the reference voltage VREF and the logic operation result VPA may be transferred to the comparator 133 through resistors R1 and R2.

The driving unit 140 may supply the driving signal VSW controlling the driving of the switch M according to the control signal VCOMP, to the switch M.

To this end, the driving unit 140 may include a second comparator 141 and an oscillator 142.

The second comparator 141 may compare a signal level of a reference signal VRAMP and a signal level of the control signal VCOMP with each other to supply the driving signal VSW, a comparison result, to the switch M, and the oscillator 142 may oscillate at a preset frequency to provide the reference signal VRAMP.

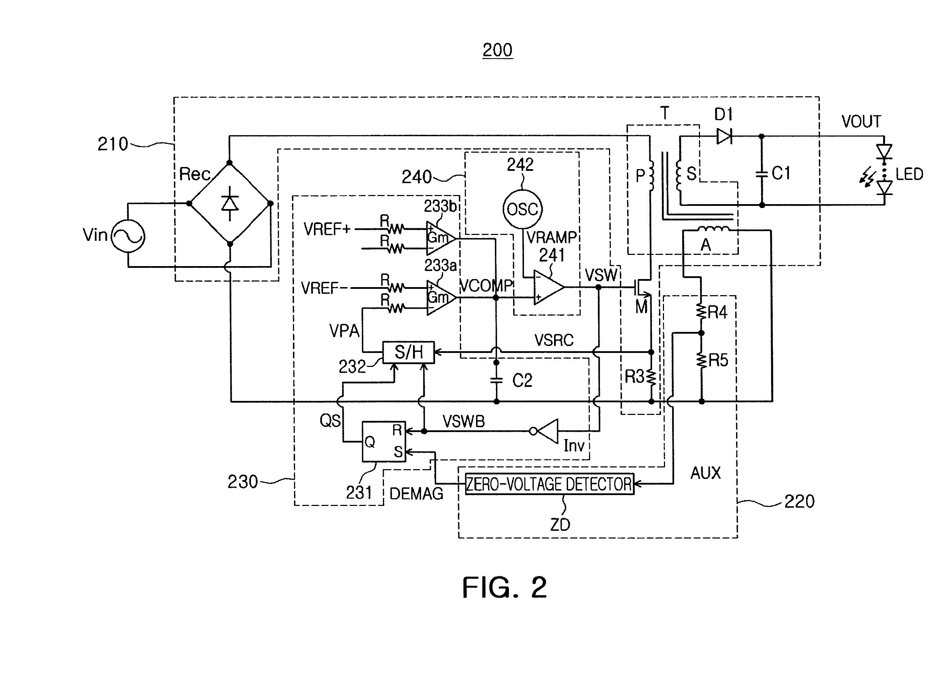

FIG. 2 is a diagram of a light emitting diode driving apparatus according to another embodiment of the present invention.

Referring to FIG. 2, in the light emitting diode driving apparatus 200 according to another embodiment of the present invention, a reference voltage may includes a first reference voltage VREF+ having a positive voltage level and a second reference voltage VREF- having a negative voltage level. Therefore, a controlling unit 230 may include first and second comparators 233a and 233b to receive each of the first and second reference voltages VREF+ and VREF- and transfer a comparison result VCOMP to a third comparator 241 of a driving unit 240, and the third comparator 241 of the driving unit 240 may transfer a driving signal VSW to a switch M. In FIG. 1, a resistor R6 allows voltage of the control signal VCOMP of the first comparator 133 charged in a capacitor C2 to be discharged. However, in FIG. 2, voltage may be provided to a capacitor C2 by the comparison result VCOMP of the first comparator 233a to which the first reference voltage VREF+ is applied, in a section in which current flows in a secondary side, and the voltage charged in the capacitor C2 may be discharged by the comparison result VCOMP of the second comparator 233b to which the second reference voltage VREF- is applied in other sections.

Meanwhile, functions and operations of a power supplying unit 210, a detecting unit 220, an oscillator 242 of the driving unit 240, and an inverter Inv, a RS latch 231, and a sample and holder 232 of a controlling unit 230 are the same as those of the power supplying unit 110, the detecting unit 120, the oscillator 142 of the driving unit 240, and the inverter Inv, the RS latch 131, and the sample and holder 132 of the controlling unit 130 shown in FIG. 1. Therefore, a detailed description thereof will be omitted.

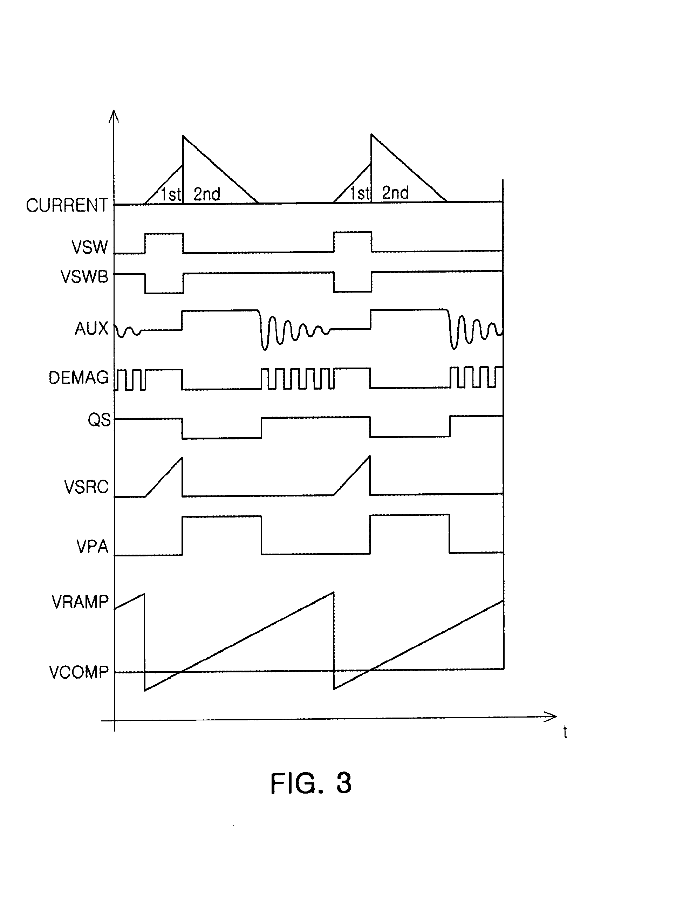

FIG. 3 is a signal waveform diagram of main portions of the light emitting diode driving apparatus according to the embodiment of the present invention.

Referring to FIGS. 1 and 3, each current flowing in the primary winding P and the secondary winding S of the transformer T of the light emitting diode driving apparatus 100 according to the embodiment of the present invention may be represented as either 1st or 2nd.

When current flowing in the switch M is sensed in order to receive current fed back from a primary side to a secondary side, a peak value of the current flowing in the secondary side may be recognized from a turns ratio of the transformer T and a value of the current flowing in the switch M. To this end, the sample and holder 132 may be used. This sample and holder 132 may calculate a time at which the current flows in the secondary side when a time at which the current starts to flow in the secondary side and a time at which the current flowing in the secondary side is stopped, wherein the time at which the current starts to flow in the secondary side is during a moment in which the switch is turned off, which corresponds to a time at which the inverted signal level VSWB of the driving signal VSW is a high level.

The auxiliary winding A may have the induced power from the secondary winding S, and the time at which the current flowing in the secondary side is stopped may be a moment in which a level of voltage AUX detected by the auxiliary winding A becomes zero. When both of the switch M and the diode D1 of the secondary side are turned off, ringing is generated. At this time, since the zero-voltage detection signal DEMAG repeatedly moves between a high level and a low level, the RS latch 131 is set when the zero-voltage detection signal DEMAG is at the high level and is reset when the inverted signal level VSWB of the driving signal VSW is at the high level, such that the sample and holder 132 may recognize the time in which the current flowing from the output QS of the RS latch 131 to the secondary side is stopped.

Therefore, the sample and holder 132 may provide the signal VPA held during a section in which the current flows in the secondary side, to the first comparator 133, and the first comparator 133 may compare a voltage level of the logic operation result VPA of the sample and holder 132 and a voltage level of the reference voltage VREF with each other to provide the control signal VCOMP controlling the switch M. A signal level of the control signal VCOMP of the first comparator 133 may be averaged by a capacitor C6 and then provided, and the second comparator 141 may compare the reference signal VRAMP and the control signal VCOMP with each other to provide the driving signal VSW controlling the driving of the switch M, to the switch M. The voltage of the control signal VCOMP may be provided to the capacitor C6 during a section in which the current flows in the secondary side and may be discharged by the resistor R6 during other sections.

A process in which the auxiliary winding A in a primary side has induced current flowing in the secondary side to maintain current regulation in the current flowing in the light emitting diode unit LED based on the current will be described. When distribution voltage of the light emitting diode unit LED increases, a section in which the current flows in the light emitting diode unit LED decreases. Therefore, a section in which the signal VPA of the sample and holder 132 is held decreases, such that a period in which the switch M is turned on increases by the control signal VCOMP of the first comparator 133 and the driving signal VSW of the second comparator 141, whereby a section in which the current flows in the secondary side increases. On the contrary, when the distribution voltage of the light emitting diode unit LED decreases, the section in which the current flows in the secondary side decreases, such than the regulation of the secondary side current may be maintained.

The operation of the light emitting diode driving apparatus according to the embodiment of the present invention described above may also be applied to the light emitting diode driving apparatus 200 according to another embodiment of the present invention shown in FIG.2.

That is, in the light emitting diode driving apparatus 200 according to another embodiment of the present invention, a reference voltage may include a first reference voltage VREF+ having a positive voltage level and a second reference voltage VREF- having a negative voltage level. Therefore, a controlling unit 230 may include first and second comparators 233a and 233b to receive each of the first and second reference voltages VREF+ and VREF- and transfer a comparison result VCOMP to a third comparator 241 of a driving unit 240, and the third comparator 241 of the driving unit 240 may transfer a driving signal VSW to a switch M. Meanwhile, since an operation other than the above-mentioned operation is the same as that of the light emitting diode driving apparatus 100 according to the embodiment of the present invention, a detailed description thereof will be omitted.

As set forth above, according to the embodiments of the present invention, the secondary side current supplied to the light emitting diode is induced using the auxiliary winding to thereby be used as a feedback signal, and the logic circuit and the Gm-comparator are used, whereby a circuit configuration may be simplified and a control may be performed so that the current flowing in the light emitting diode becomes a constant current.

While the present invention has been shown and described in connection with the embodiments, it will be apparent to those skilled in the art that modifications and variations can be made without departing from the spirit and scope of the invention as defined by the appended claims.

## Claims

1. A light emitting diode driving apparatus comprising:
a power supplying unit receiving input power to convert the input power into a preset driving power and supplying the driving power to a light emitting diode unit including at least one light emitting diode;
a detecting unit receiving the driving power supplied to the light emitting diode unit to detect voltage flowing in the light emitting diode unit;
a controlling unit comparing a detection voltage detected by the detecting unit with a preset reference voltage to control a power conversion operation of the power supplying unit according to a comparison result; and
a driving unit driving the power conversion operation of the power supplying unit according to controlling by the controlling unit.

2. The light emitting diode driving apparatus of claim 1, wherein the detecting unit detects zero-voltage in the received driving power.

3. The light emitting diode driving apparatus of claim 2, wherein the controlling unit compares a result of the logic operation between the detection voltage detected by the detecting unit and a driving signal of the driving unit with
the reference voltage to control the power conversion operation of the power supplying unit.

4. The light emitting diode driving apparatus of claim 3, wherein a voltage level of the reference voltage is determined according to a voltage level of the input power.

5. The light emitting diode driving apparatus of claim 3, wherein the reference voltage includes a first reference voltage having a positive voltage level and a second reference voltage having a negative voltage level.

6. The light emitting diode driving apparatus of claim 3, wherein the driving unit compares a control signal of the controlling unit with a preset reference signal to provide the driving signal to the power supplying unit.

7. A light emitting diode driving apparatus comprising:
a power supplying unit receiving input power to convert the input power into a preset driving power, supplying the driving power to a light emitting diode unit including at least one light emitting diode, and including a transformer having a primary winding receiving the input power, a secondary winding magnetically coupled to the primary winding, and an auxiliary winding having power induced from the secondary winding;
a detecting unit receiving the driving power supplied to the light emitting diode unit to detect voltage flowing in the light emitting diode unit;
a controlling unit comparing detection voltage detected by the detecting unit with a preset reference voltage to control a power conversion operation of the power supplying unit according to a comparison result; and
a driving unit driving the power conversion operation of the power supplying unit according to controlling by the controlling unit.

8. The light emitting diode driving apparatus of claim 7, wherein the detecting unit detects zero-voltage in the received driving power.

9. The light emitting diode driving apparatus of claim 8, wherein the detecting unit includes a zero-voltage detector detecting zero-voltage in the driving power received from the secondary winding of the transformer.

10. The light emitting diode driving apparatus of claim 8, wherein the controlling unit compares a result of the logic operation between the detection voltage detected by the detecting unit and a driving signal of the driving unit with the reference voltage to control the power conversion operation
of the power supplying unit.

11. The light emitting diode driving apparatus of claim 10, wherein the controlling unit includes:
an inverter inverting a signal level of the driving signal of the driving unit;
an RS latch having a set terminal having a voltage level of the detected driving power applied thereto, a reset terminal having the inverted signal level of the driving signal applied thereto from the inverter, and a Q terminal performing a logic operation on the voltage level of the detected driving power and the inverted signal level of the driving signal to output a result of the logic operation;
a sample and holder sampling the logic operation result from the RS latch at a preset time interval; and
a first comparator comparing a sampling signal from the sample and holder with the reference voltage to transfer a control signal to the driving unit according to a comparison result.

12. The light emitting diode driving apparatus of claim 11, wherein the driving unit includes:
an oscillator oscillating at a preset frequency to provide a reference signal; and
a second comparator comparing the reference signal from the oscillator and the control signal with each other to provid a driving signal driving a switch of the power supplying unit.

13. The light emitting diode driving apparatus of claim 11, wherein the reference voltage is obtained by dividing the input power.

14. The light emitting diode driving apparatus of claim 10, wherein the reference voltage includes a first reference voltage having a positive voltage level and a second reference voltage having a negative voltage level.

15. The light emitting diode driving apparatus of claim 14, wherein the controlling unit includes:
an inverter inverting a signal level of the driving signal of the driving unit;
an RS latch having a set terminal having a voltage level of the detected driving power applied thereto, a reset terminal having the inverted signal level of the driving signal applied thereto from the inverter, and a Q terminal performing a logic operation on the voltage level of the detected driving power and the inverted signal level of the driving signal to output a result of the logic operation;
a sample and holder sampling the logic operation result from the RS latch at a preset time interval;
a first comparator comparing a sampling signal from the sample and holder with the first reference voltage; and
a second comparator comparing the sampling signal from the sample and holder with the second reference voltage.

16. The light emitting diode driving apparatus of claim 15, wherein the driving unit includes:
an oscillator oscillating at a preset frequency to provide a reference signal; and
a third comparator comparing the reference signal from the oscillator and the control signal with each other to provide a driving signal driving a switch of the power supplying unit.
